# EUROPEAN PATENT APPLICATION

(11) **EP 1 172 909 A1**
(43) Date of publication of application: **16.01.2002**
(21) Application number: 01115435.8
(22) Date of filing: 27.06.2001
(51) Int. Cl.: H02B 1/42

(54) **Control unit for electrical systems with improved component arrangement**

(30) Priority: 14.07.2000 IT GE000024
(71) Applicant: BOCCHIOTTI SOCIETA'PER L'INDUSTRIA ELETTROTECNICA S.P.A., I-16121 Genova (IT)
(72) Inventor: Messeri, Massimo, Bocchiotti Societa p.l'I.El., 16121 Genova (IT)
(74) Representative: Porsia, Attilio, Dr.

(57) **Abstract**

Control unit for electrical systems, comprising a box-shaped body (1) on whose bottom wall (101) at least two cross-pieces (2, 3) for mounting the control unit elements are arranged, said cross-pieces being located on two supports (4) which are perpendicular to the latter and which are connected to said bottom wall (101) of said box-shaped body (1); said supports (4) are provided with means (104, 204) for positioning said cross-pieces (2, 3) allowing to arrange the latter in at least two different reciprocal positions (2, 2'; 3, 3') with a different distance between the longitudinal axes of said cross-pieces (2, 3).

## Description

The present invention relates to control units for electrical systems, and in particular to a control unit in which the arrangement of the components within it is highly improved.

Control units for electrical systems which are marketed at present, in particular for small and medium electrical systems for domestic use, consist of a box-shaped body containing support means, commonly cross-pieces made of metal or similar materials, on which the components of the control unit are placed. Said cross-pieces can be fastened directly to the bottom of the box-shaped body, or they can be mounted on support elements which are in their turn suitably connected with the bottom of said box-shaped body. The cross-pieces, usually two or more for each control unit, are positioned so as to enable the best arrangement of the components; however, the latter, usually known as modular devices, can have very different sizes one from the other according to their functions, which can cause some disadvantages when they have to be wired within the box-shaped body of the control unit. This problem is related to the arrangement of the cross-pieces one with respect to the other, in particular to the distance between two adjacent cross-pieces. This distance is usually fixed and there is no adaptation flexibility.

The present invention therefore aims at providing a control unit in which said cross-pieces can be positioned in various ways, thus enabling to vary the distance between a cross-piece and the adjacent one, so as to allow to place said modular devices in the most favorable position for their wiring, without introducing special structural modifications involving the box-shaped body of the control unit.

The object of the present invention is therefore a control unit for electrical systems, comprising a box-shaped body on whose bottom wall at least two cross-pieces are arranged for mounting the control unit elements, said cross-pieces being placed on two supports which are perpendicular to them and which are connected to said bottom wall of said box-shaped body, characterized in that said supports are provided with means for positioning said cross-pieces allowing to arrange the latter in at least two reciprocal positions with a different distance between the longitudinal axes of said cross-pieces.

Said means for positioning said cross-pieces can comprise one or more pins cooperating with one or more holes made on both ends of said cross-pieces. It can also be advantageously provided for seats cooperating with holes made in said ends of the cross-pieces, into which suitable fastening means can be introduced.

A form of embodiment provides for at least two positions on the supports for each cross-piece.

Further characteristics and advantages of the unit according to the present invention will be evident from the following detailed description of a form of embodiment of said invention, which is carried out by way of non-limiting example with reference to the enclosed drawings, in which:
Figure 1 is a plan view of the control unit according to the present invention; and
Figure 2 is a partial perspective view of the control unit according to the present invention.

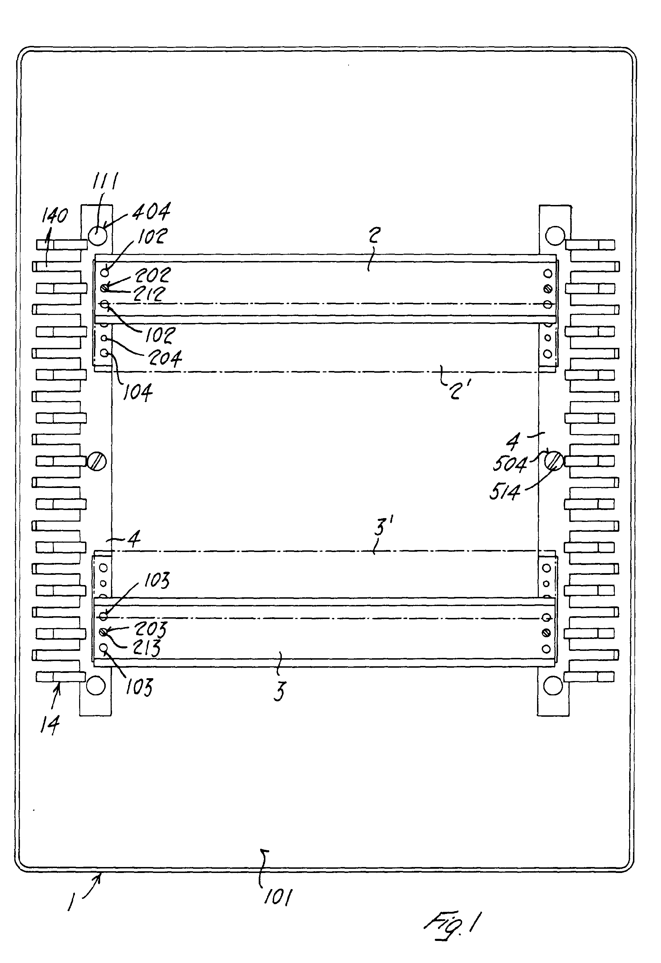

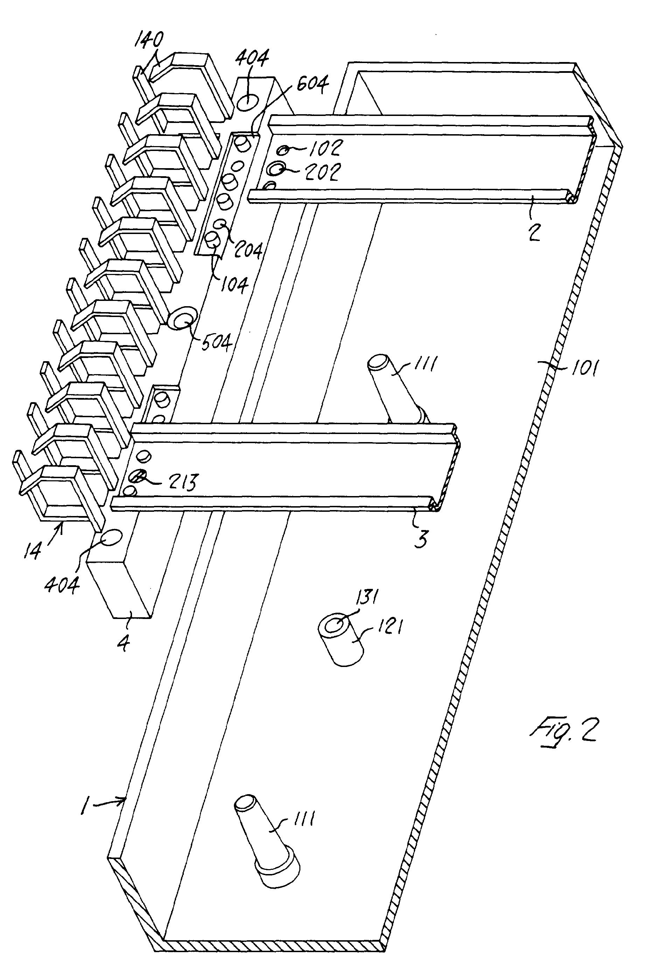

Figure 1 shows a form of embodiment of the control unit according to the present invention; the numeral 1 indicates the box-shaped body of the control unit. On the bottom wall 101 of said body 1 two supports 4 are arranged parallel to the longitudinal axis of said control unit, said supports being provided on their respective ends with the holes 404 cooperating with the pins 111 protruding from the wall 101 of the body 1. The connection between the supports 4 and the wall 101 is further reinforced by means of the holes 504 and of the fastening means, i.e. the screws 514, inserted into said holes (see Figure 2). Said supports show the distribution channels 14 consisting of the plates 140. The supports 4 contain pins 104 protruding with their axis perpendicular to the plane of the wall 101, which cooperate with the holes 102, 103 made on the ends of the cross-pieces 2 and 3. It is further provided, between two pairs of pins 104, for the holes 204 which, after being aligned with the holes 202, 203 of the cross-pieces 2, 3, enable the introduction of the screws 212, 213 for fastening said cross-pieces.

As can be inferred from the drawing, both cross-pieces 2, 3 can be alternatively located in their respective other positions indicated with 2' and 3' and with dashed and dotted lines; four different arrangements of the cross-pieces within the control unit are therefore possible.

Figure 2 shows the installation of the supports 4 on the wall 101 of the control unit, and of the cross-pieces 2, 3 on said supports. As is evident from the drawing, beyond the pins 111, also the sleeve 121 provided with the axial cavity 131 protrudes from the bottom wall 101 of the body 1 of the control unit, said cavity being apt to cooperated with the screw 514 shown in Figure 1 and inserted into the through hole 504 made in the support 4. Whereas the cross-piece 3 is fastened to the supports 4 by the introduction of the pins 104 into the holes 103 and of the screw 213 into the hole 203, the cross-piece 1 has not been positioned on the support yet. Within the hollow 604 formed on the wall of said support two pairs of pins 104 are present, among which a hole 204 is placed, said hole being apt to cooperate with a fastening screw.

The operation of the control unit according to the present invention will be evident from the following. As is clearly shown in Figure 2, the cross-pieces 2, 3 can be arranged in at least two different positions on their installation onto the supports 4, thanks to two different series of means apt to be coupled with the ends of such cross-pieces, said means being provided on said supports. The existence of such an alternative simplifies the tasks of a technician who is fitting the system and has to correctly position the various components within the control unit. As a matter of fact, the cross-pieces can be closer or farther one from the other depending on room needs for wiring operations.

This kind of solution is quite easy because it does not require any special structural modification involving the box-shaped body of the control unit, since the means for positioning the cross-pieces are located on supports which can be removed from the bottom wall of said body. It is evident that the present solution can show different alternatives, changing for instance the kind of coupling means between cross-pieces and supports and the number of possible positions the various cross-pieces can take on. In the form of embodiment shown in the figures pins and screw-type fastening means were used; it is obvious that said means can be an alternative the ones to the others.

## Claims

1. Control unit for electrical systems, comprising a box-shaped body (1) on whose bottom wall (101) at least two cross-pieces (2, 3) for mounting the control unit elements are arranged, said cross-pieces being located on two supports (4) which are perpendicular to them and which are connected to said bottom wall (101) of said box-shaped body (1), **characterized in that** said supports (4) are provided with means (104, 204) for positioning said cross-pieces allowing to arrange the latter in at least two different reciprocal positions (2, 2'; 3, 3') with a different distance between the longitudinal axes of said cross-pieces (2, 3).

2. Control unit according to claim 1, in which said means for positioning said cross-pieces (2, 3) comprise one or more pins (104) cooperating with one or more holes (102, 103) made on both ends of said cross-pieces (2, 3).

3. Control unit according to claim 1, in which said means for positioning said cross-pieces (2, 3) comprise one or more seats (204) cooperating with holes (202, 203) made on the ends of said cross-pieces, into which suitable fastening means (212, 213) are introduced.

4. Control unit according to any of the preceding claims, in which it is provided for at least two different positions (2, 3; 2', 3') on the supports (4) for each cross-piece (2, 3)
